# EUROPEAN PATENT APPLICATION

(11) **EP 4 455 427 A1**
(43) Date of publication of application: **30.10.2024**
(21) Application number: 24172784.1
(22) Date of filing: 26.04.2024
(51) Int. Cl.: E04H 4/12, C02F 103/42

(54) **SYSTEM FOR CLEANING A SWIMMING POOL AND PROCESS FOR OPERATING IT**

(30) Priority: 28.04.2023 IT 202300008454
(71) Applicant: Leucum System SRL, 23852 Garlate (LC) (IT)
(72) Inventor: MILANI, Fabio, 23900 Lecco (LC) (IT)
(74) Representative: Bonatto, Marco

(57) **Abstract**

The system for cleaning a swimming pool (1), according to the invention, comprises a main basin (3), a compensation basin (5), a filtration system (7), a level detector (9) and is configured for regulating the inflow towards the filtration system (7) of the water from the one or more bottom intake mouths (32) and the compensation basin (5) based on the detections of the level detector (9).

## Description

### Field of the invention

The present invention relates to a system for cleaning a swimming pool, in particular a filtration system for swimming pools and a process for operating it.
Such system and process are particularly adapted to make and operate public swimming pools or other large swimming pools, in particular their filtration systems.

### State of the art

In the current management of public swimming pools, there is a need to keep the quality of the water consistently within the limits of the Uni10637 standard.

For this purpose, the water of large public swimming pools is treated with a continuous process, both chemically -by chlorine- and mechanically through sand, diatomaceous earth, or cartridge filters.

In known swimming pool systems, as solid particles accumulate in the filters, the water flow downstream of them decreases until the filters need to be backwashed by flowing the water in the opposite direction to that of the normal filtration mode; for this backwash, water from the swimming pool itself and accumulated, preferably by gravity, in a compensation basin is currently used.

For chemical treatment, chlorine-based substances such as for example trichloro isocyanurate, dichloro isocyanurate, and calcium hypochlorite are commercially available.

These substances disinfect the water very effectively but have various drawbacks.

Isocyanurate substances are stable in aqueous solution due to cyanuric acid, which can diffuse the disinfectant evenly throughout the water volume.

Calcium hypochlorite, chemically less stable than isocyanurates, is used in small private swimming pools, which contain or in any case use a smaller amount of water.

If used alone, calcium hypochlorite, being more chemically unstable, is incapable of diffusing sufficiently evenly in the large masses of water used by public swimming pools, and it can only be used in combination with isocyanurate substances that stabilize it, allowing it to diffuse more evenly in the entire mass of water while it is still an active disinfectant.

To ensure sufficient hygiene in public swimming pools, cyanuric acid is currently indispensable.

Chlorine is quickly inactivated by reacting with organic pollutants and sunlight, while cyanuric acid is instead stored longer in the water, accumulating due to its specific weight being more than twice of water -2.19 kg/litre-, on the bottom of swimming pools, and the only way to dispose it is by replacing the water itself with fresh water from the public distribution network or another external water source.

Excessive concentrations of cyanuric acid on the bottom of swimming pools often cause algae to be formed despite the water having optimal pH and chlorine concentration values or in any case within the standards.

The hygiene of the water is also achieved by flowing it through sand or diatomaceous earth filters: pumps draw water from the compensation basin and inject it in the filters, which trap organic particles and other residues, after which the water is reinjected to the swimming pool.

According to current Italian standards, the filtration system must comprise at least two sand or diatomaceous earth filters and a number of pumps equal to the filters plus one spare.

The author of the present invention has observed that known public swimming pool systems previously described have at least the following chronic criticalities.

A first constructive criticality lies in that according to current regulations, the pumps of the system can draw water only from the compensation basin, to which it flows by gravity after overflowing from the overflow gutters arranged along the perimeter of the swimming pool.

Therefore, during the filter washing step, only water from the compensation basin is currently used; this water is then discharged in the sewer, leaving the worst water rich in cyanuric acid on the bottom of the swimming pool.

A second criticality of current public swimming pool filtration systems lies in controlling the pumps based on the level of the water in the compensation basin.

The currently most widespread determination system is that based on three metal rods placed at different heights in the compensation basin.

If the level of the water drops below the rod closest to the basin bottom, the pumps are deactivated.

If, after the pumps are deactivated, the level of the water rises to reach the rod at intermediate height, in known systems the pumps are reactivated.

When the level of the water rises to reach the third rod, that is, the highest above the basin bottom, in known systems the solenoid valve that opens and closes the fresh water supply conduit from an external network, for example, a public water distribution network, or a source, stream, or lake, is deactivated.

When instead the level of the water reaches the third rod by descending, such solenoid valve is activated.

This system for managing the level of the water is very imprecise and, according to the author of the present invention, too incapable of managing the intermediate steps of water lowering.

Furthermore, the rods, being constantly either dived in chlorinated water or in an atmosphere rich in humidity and chlorine, undergo severe oxidation, and with them, the electric cables connected thereto in the sections deprived of the original insulating sheath.

Such oxidation consumes the cables and creates a green patina that compromises the proper operation of the devices over time until they fail, increasing the maintenance costs.

A third criticality of current public swimming pool filtration systems occurs during the filter washing step.

If the level of the water in the compensation basin continuously decreases, for example due to filter washing, evaporation in outdoor swimming pools in summer, or dispersion following dives, the rod system for determining the level of the water in such basin activates the solenoid valve that injects the water from network -or from another external source- when the level of the water drops to reach the intermediate rod and stops the pumps.

This serves to raise the level of the water in the compensation tank, but if the filter washing process is not yet finished, the filters are washed even by fresh water from the external network and shortly after discharged in the sewer.

This fact, besides being strongly discouraged by the UNI**10637** standard, means that there is no continuous daily water replacement in the swimming pool, while the standards require that such replacement is at least, and according to a very recent version of the standard, equal to **2.5%** of the swimming pool volume.

In such operation conditions, the quality of the water used to wash the filters is random, the fresh network water is wasted to wash them while the more contaminated water of the swimming pool is stored therein.

The worsening of the swimming pool water quality is even more severe if the level of the compensation basin drops to the rod closest to the bottom, as in such a case, not only the pumps but also the chlorination system usually stop for a not easily predictable time because it is constrained to various other needs such as for example being incapable of reducing the pressure too much in the showers or other areas of the system, further worsening the hygiene of the swimming pool water.

A fourth criticality of current public swimming pool filtration systems occurs during the normal filtration operation when the level of the compensation basin drops to reach the lowest rod, stopping the pumps.

The level in the compensation basin can decrease, for example, due to the sudden exit of a large number of people at the end of a swimming course, due to water evaporation or dispersion due to dives, or due to a sum of multiple previous causes, there could be the stopping of the pumps as there could be a too low level in the compensation basin.

Publication US3916458 describes a system for cleaning a swimming pool without a compensation basin and comprising a main drain **16** arranged at the deepest end of the swimming pool.

The system is capable of drawing water from the main drain **16** on the bottom and filtering it during the normal operation of the swimming pool and is provided with suitable deflectors so as to allow the introduction of water, during the reverse flow operation, substantially over the entire area of the main drain, thus minimizing the possibility of creating a high turbulence area at the centre of the swimming pool during the reverse flow operation, while during the washing of the filters **20,** the latter are washed with the water drawn from the gutter at the basin edge **13.**

Publications WO2017/127802A1 and US2003/196942A1 describe swimming pool systems whose pumps are operated at variable speed.

An object of the present invention is to overcome the above-mentioned drawbacks and, in particular, to provide a system for cleaning a swimming pool in which the water is better replaced, fresh water of the external network is less sent to the sewer, and the pumps operate more regularly, in particular with less frequent on and off cycles, and which reduces failures and maintenance needs.

### Summary of the invention

Such object is achieved, in a first aspect of the present invention, by a system for cleaning a swimming pool having the features according to claim **1**.

In a second aspect of the invention, such object is achieved by a process for operating a system for cleaning a swimming pool having the features according to claim **13.**

Further features of the invention are the subject of the dependent claims.

The advantages achievable by the present invention will be more apparent to a person skilled in the art from the following detailed description of a particular non-limiting exemplary embodiment, illustrated with reference to the following schematic figures.

### List of Figures

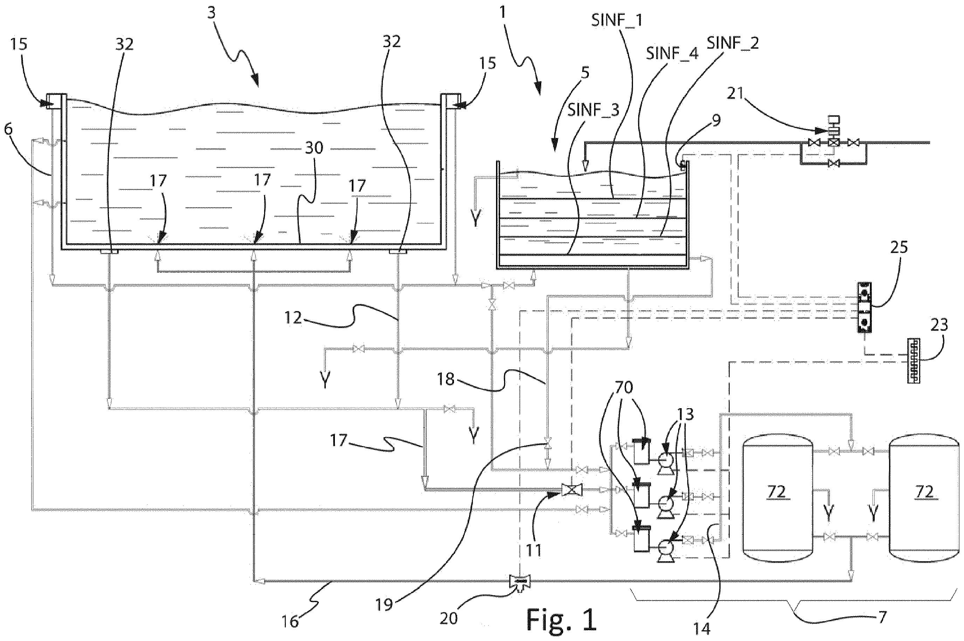

Figure **1** shows a functional diagram of a system for cleaning a swimming pool according to a particular embodiment of the present invention.

### Detailed description

Figure **1** relates to a system for cleaning a swimming pool, indicated by overall reference **1,** according to a particular embodiment of the present invention.

The system **1** comprises a main basin **3,** a compensation basin **5,** a filtration system **7,** and a level detector 9.

The main basin **3** is configured for containing a mass of water such as to allow one or more people to at least partially dive therein and preferably to swim or practice water sports such as for example water polo.

The main basin **3** forms a bottom **30** in the lower part and comprises one or more bottom intake mouths **32,** each of which is placed at or near of said bottom **30.**

For this purpose, the mouth of each bottom intake mouth **32** can be arranged at a height from the adjacent portion of the bottom **30** between **0-50** centimetres, or between **0-30** centimetres, between **0-20** centimetres, between **0-10** centimetres, or between **0-5** centimetres.

The compensation basin **5** is preferably configured for being inaccessible to bathers.

The compensation basin **5** is fluidically connected to the main basin **3** and is configured for receiving and containing water from the main basin **3** and/or supply water to such main basin **3.**

For this purpose, the main basin **3** is preferably of the overflow edge type and is therefore preferably provided with a perimeter gutter **15** that extends along the edge of the main bucket of the basin **3** itself and is configured for receiving the water that overflows from the basin **3.**

The perimeter gutter **15** can be fluidically connected to the compensation basin **5** by one or more conduits **6** through which the water overflowing from the basin **3** and collected in the gutter **15** flows, preferably by gravity, in the compensation basin **5.**

For this purpose, the free surface of the water of the compensation basin is placed lower than the free surface of the water contained in the main basin **3.**

More preferably, the free surface of the water of the compensation basin is placed lower than the bottom of the main basin **3.**

The compensation basin **5** preferably has a capacity -or volume- smaller than the main basin **3,** for example between **0.03-0.5** times the capacity or volume of the main basin **3,** or between **0.05-0.3** times, between **0.07-0.2** times, or between **0.07-0.1** times the capacity or volume of the main basin **3.**

The filtration system **7** is configured for filtering the water from the main basin **3** and the compensation basin **5** and preferably comprises one or more prefilters **70** and one or more main filters **72.**

The prefilters **70** are intended to trap the largest particles such as hair and leaf fragments.

The main filters **72** are intended to trap smaller particles.

Each of the main filters **72** contains a filtering bed, preferably made of sand or, even more preferably, of diatomaceous earth.

The level detector **9** is configured for determining the level of the water contained in the compensation basin **5** and is preferably of the ultrasonic type, for example, a sensor of the SITRANS LU type **150** produced by SIEMENS (Germany).

Preferably, the system **1** comprises one or more pumps **13,** each of which is configured for directing the water from the main basin **3** and/or the compensation basin **5** towards the one or more main filters **72** or more generally towards the filtration system **7.**

The pumps **13** can be, for example, turbopumps or centrifugal pumps.

The system **1** advantageously comprises one or more inverters **23** configured for varying the frequency of the current for supplying the electric motors that preferably drive the pumps **13** if such electric motors are supplied by alternating current and are, for example, of the synchronous or asynchronous type.

Advantageously, the one or more inverters are configured for varying the frequency of the current for supplying all the electric motors that drive all the pumps **13.**

Each pump **13** can be arranged, for example, downstream of a respective prefilter **70** and upstream of the main filters **72.**

The deliveries of the various pumps **13** preferably converge in a manifold **14** which preferably supplies the various main filters **72** in parallel (Figure).

The water can flow from the main basin **3** and the compensation basin **5** towards the filtration system **7** through the conduits **12** and **18,** respectively.

Preferably, the system **1** comprises a disinfection system configured for diffusing disinfectant substances, such as for example dichloro or trichloro isocyanurate, calcium hypochlorite, or other chlorine-based substances, in the water contained in the main basin **3.**

Preferably, the filtration system **7** is configured for supplying filtered water to the main basin **3,** for example, by one or more filter delivery conduits **16.**

Preferably, each filter delivery conduit **16** leads to the main basin by one or more delivery nozzles **17** preferably arranged on the bottom or the walls of the main basin **3.**

The system **1** preferably comprises an external inflow valve **21** that fluidically connects the system **1** to an external source of fresh water, such as for example a public water distribution network, a river, lake, stream, or spring.

Preferably, the system **1** is configured so that the external inflow valve **21** or, more generally, the external source of fresh water supplies the compensation basin **5,** i.e., injecting the fresh water in the compensation basin **5.**

The valve **21** can be, for example, a solenoid valve.

According to an aspect of the invention, the swimming pool system is programmed or in any case configured for regulating the inflow towards the filtration system **7** of the water from the one or more bottom intake mouths **32** and the compensation basin **5** based on the detections of the level detector **9.**

Preferably, the system **1** comprises a bottom control valve **11** configured for regulating the inflow towards the filtration system **7** and preferably towards the one or more main filters **72** of the water from the one or more bottom intake mouths **32** and possibly also from the compensation basin **5.**

Preferably, the system **1** is programmed or in any case configured for operating in a normal filtering operation mode in which, when the level detector **9** detects that the level of the water in the compensation basin **5** is substantially equal to or lower than a first lower threshold **SINF_1,** the bottom control valve **11** is at least partially open allowing the inflow towards the one or more main filters **72** or more generally towards the filtration system **7** of water from the one or more bottom intake mouths **32.**

Preferably, the more the system **1** is programmed or in any case configured for opening the bottom control valve **11,** the more the level of the water in the compensation basin is near to the second lower threshold **SINF_2** when such level is lower than the first lower threshold **SINF_1.**

Such partial opening makes the operation of the system **1** more regular and makes the stopping of the pumps **13** and the chlorination system less frequent.

Preferably, the system **1** is programmed or in any case configured for allowing the inflow towards the one or more main filters **72** or more generally towards the filtration system **7** of water from the compensation basin **5** when the level detector **9** detects that the level of the water in the compensation basin **5** is substantially equal to or lower than the first lower threshold **SINF_1** or, more preferably, equal to or lower than a fourth threshold **SINF_4** in the normal filtering operation mode.

Such threshold **SINF_4** is preferably between the thresholds **SINF_1** and **SINF_2**, meaning that it is lower than **SINF_1** and higher than **SINF_2:** this makes the operation of the system **1** more regular.

In fact, advantageously in such case, the system **1** is programmed or in any case configured for allowing the inflow towards the one or more main filters **72** or more generally towards the filtration system **7** of water from the compensation basin **5** when the level detector **9** detects that the level of the water in the compensation basin **5** decreases to reach or exceed the fourth lower threshold **SINF_4** while dropping in the normal filtering operation mode.

Still in this case, the system **1** is advantageously programmed or in any case configured for preventing the inflow towards the one or more main filters **72** or more generally towards the filtration system **7** of water from the compensation basin **5** when the level detector **9** detects that the level of the water in the compensation basin **5** increases to reach or exceed the fourth lower threshold **SINF_4** while rising in the normal filtering operation mode.

Preferably, the system **1** is programmed or in any case configured for fully opening the bottom control valve **11** allowing the inflow towards the one or more main filters **72** or more generally towards the filtration system **7** of water from the one or more bottom intake mouths **32** when the level detector **9** detects that the level of the water in the compensation basin 5 is substantially equal to or lower than a second lower threshold **SINF_2**, where the second lower threshold **SINF_2** is lower than the first lower threshold **SINF_1.**

The level difference between the thresholds **SINF_1** and **SINF_2** can be, for example, between about **5-70** centimetres, or between **10-50** centimetres, between **20-40** centimetres, or between **25-35** centimetres.

Preferably, the system **1** is programmed or in any case configured for fully closing the bottom control valve **11,** preventing the inflow towards the filtration system **7** of water from the one or more bottom intake mouths **32** when the level detector **9** detects that the level of the water in the compensation basin **5** is substantially higher than the first lower threshold **SINF_1.**

Preferably, the system **1** is programmed or in any case configured for allowing the inflow towards the one or more main filters **72** or more generally towards the filtration system **7** of water from the compensation basin **5** when the level detector **9** detects that the level of the water in the compensation basin **5** is substantially higher than the first lower threshold **SINF_1** in the normal filtering operation mode.

Preferably, the system **1** is programmed or in any case configured for operating in a filter cleaning operation mode in which the direction of the flow of the water passing through the filtering bed of the main filters **72** is reversed to clean them.

The system **1** can be switched from the normal filtering operation mode to the filter cleaning operation mode, for example, by acting on a manual selector not shown, or by automatic command by a PLC or other control logic unit.

Preferably, the system **1** is programmed or in any case configured for allowing, in the filter cleaning operation mode, the inflow towards the one or more main filters **72** or more generally towards the filtration system **7** of water from the one or more bottom intake mouths **32.**

Preferably, the system **1** is programmed or in any case configured for opening, partially or totally, the bottom control valve **11** only in the filter cleaning operation mode.

Preferably, the system **1** is programmed or in any case configured for closing, or maintaining fully closed, the bottom control valve **11** in the filter cleaning operation mode.

Preferably, in the filter cleaning operation mode, the system **1** is programmed or in any case configured for preventing the inflow towards the one or more main filters **72** or more generally towards the filtration system **7** of water from the compensation basin **5.**

For this purpose, the system is preferably provided with a valve **19** arranged along the conduit **18** and which can be fully closed, preferably reversibly.

The valve **19** is preferably a check valve.

The valve **19** is configured for preventing the water of the main basin **3** from outflowing towards the compensation basin **5** when the valve **11** is open.

The bottom control valve **11** is preferably a valve capable of regulating -more preferably with continuous variation- the flow rate that flows respectively along the conduits **18** and **12.**

For this purpose, the valve **11** can be, for example, of the gate, ball, or butterfly type.

More preferably, an additional check or shut-off valve (not shown) is arranged upstream or downstream of valve **19;** such additional valve can be, for example, a manual valve useful in case of maintenance or cleaning of the compensation basin **5.**

The system **1** preferably comprises a control logic unit **25** which can, in turn, comprise, for example, a PLC (Programmable Logic Controller), a computer, or other device comprising a microprocessor logic unit.

The logic unit **25** can be installed inside one of the other components of the system **1,** near, for example, of the main basin **3** - for example at a distance from it equal to or lower than **5** metres, **10** metres, **50** metres, **100** metres, or **500** metres - or be located in a remote location, for example, tens or hundreds of kilometres away and be connected to the rest of the system **1** by telematic channels.

In the normal filtering operation mode, the system **1** is preferably programmed or in any case configured for maintaining the flow rate of the water from the main basin **3** and/or the compensation basin **5** and directed towards the filtration system **7** around a first target flow rate value, for example within a tolerance range by excess or default with respect to such first target value of between **+-30%** of such target value, or between **+-20%, +-10%, +-5%** of such first target value.

Such first target flow rate value can be determined, for example, based on the UNI**10637** standard.

Preferably, the system **1** is programmed or in any case configured for maintaining the flow rate of the water from the main basin **3** and/or the compensation basin **5** and directed towards the filtration system **7** around a second target flow rate value when it operates in the filter cleaning operation mode, for example within a tolerance range by excess or default with respect to such second target value of between **+-30%** of such target value, or between **+-20%, +-10%, +-5%** of such second target value.

Such second target flow rate value is preferably determined based on the constructive features of the main filters **72.**

Advantageously, the system is programmed or in any case configured for regulating the flow rate or more generally the hydraulic head of the one or more pumps **13** based on the flow rate or speed of the water filtered by the filtration system **7** and directed from it towards the main basin **3** and/or the compensation basin **5.**

For this purpose, the system **1** is preferably provided with a flow rate meter **20** arranged downstream of the filtration system **7,** preferably along the conduit **16,** and the system **1** is programmed or in any case configured for controlling the rotation speed, or more generally the hydraulic head of the pumps **13** based on the detections of the flow rate meter 20, preferably so as to make the flow rate or hydraulic head detected by the flow rate meter **20** as near as possible to the first target flow rate value or within the previously described tolerance ranges.

Still for this purpose, the inverter or inverters **23** can vary the frequency for supplying the motors of the pumps **13** based on the detections of the flow rate meter **20.**

This allows to eliminate the spare pump the current systems with fixed operation point pumps are provided with, i.e., at a fixed rotation speed, eliminating all the drawbacks resulting from it: in known systems, indeed, the spare pump is supposed to come into operation so as to guarantee the required flow rate when one of the other pumps is deactivated for maintenance.

Therefore, the spare pump remains off most of the time, wearing out quickly and causing encrustations on the impellers; furthermore, being mounted in typically humid environments, the electric part also undergoes significant wearing due to inactivity.

In the system **1,** instead, when a pump **13** is deactivated for maintenance, the other pumps **13** still ensure the required flow rate in the delivery conduit **16** since they are controlled by the inverter or inverters **23** precisely based on the flow rate or hydraulic head detected in the delivery conduit **16** by the flow rate meter **20;** instead, the pumps **13** can all operate simultaneously when none of them is under maintenance, eliminating the damage caused by inactivity and prolonging their operational life.

Preferably, the system **1** is programmed or in any case configured for stopping the operation of - preferably all - the pumps **13** and the chlorination system when the level of the water in the compensation basin **5** drops to a third threshold **SINF_3**, preferably both in the normal filtering operation mode and in the filter cleaning operation mode.

The threshold **SINF_3** is preferably lower than the threshold **SINF_2.**

The threshold **SINF_3** constitutes a precautionary measure but drawing water from the one or more bottom intake mouths **32** as previously described makes the stopping of the pumps **13** and the chlorination system an extremely rare, if not practically impossible, event.

From the present description, it is apparent that in the system **1** there is practically no need to wash the main filters **72** with water of the compensation basin **5,** or in any case, such a need is much rarer than in known swimming pool systems; this greatly reduces or eliminates the situations of stopping the pumps **13** and the chlorination system, prolonging their operational life and reducing their maintenance needs.

The lack of stopping, or in any case its reduced frequency, of the chlorination system increases the hygiene of the water in the main basin **3.**

The reduced or absent need to wash the filters with water of the compensation basin **5** also remarkably reduces the situations in which the fresh external water is discharged in the sewer shortly after passing through the compensation basin.

At the same time, in the system **1,** there is a much greater replacement of the deeper water of the main basin **3,** and therefore a greater evacuation of hydrocyanic acid and other pollutants that tend to accumulate in the lower areas of the basin **3,** significantly increasing the hygiene of the water.

The control of the electric motors of the pumps **13** by inverters solves a number of problems of known swimming pool systems.

A further criticality of current public swimming pool filtration systems is indeed given by the fact that the pumps are usually at a fixed rotation speed imposed by the frequency, equal to **50** or **60** Hz, of the alternating current of the electric network, as the pumps are currently driven by three-phase electric motors.

This means that in current swimming pool systems there are frequent shutdowns and restarts of the pumps, caused for example by lowering the level of the water in the compensation basin or washing some or all of the sand filters, determining a greater wearing of the same, a higher electric consumption, and for the pumps that only operate at **50** or **60** Hz, the restarts cause water hammer, which cause breakages and liquid blow-by from the pipe joints over time, increasing the maintenance costs.

Furthermore, adopting fixed operation point pumps at **50-60** Hz leads them to a remarkable oversizing, resulting in excessive electric consumption and maintenance costs in the filtration step: the sizing of the pumps is indeed made in a completely empirical manner, having to take into account the theoretical head losses, the nominal flow rate of the pump, and the work curves; according to the abovementioned UNI standard, furthermore, the flow rate deliverable by the pumps must be increased by **50%** of the flow rate due to the difference in head loss between the clean filter condition and the condition in which the filter must be backwashed.

All this means that with clean filters, there is an excessive electricity consumption and a high filtration speed with very high costs, both in terms of consumption and maintenance, and furthermore, in the vast majority of public swimming systems, the property is owned by public administrations, and the bids to win the contracts for constructing the systems are always downward, forcing the executing companies to mount medium-quality materials and pumps, resulting in increased maintenance costs over time.

If, instead, the pumps **13** are supplied and controlled by inverters, it is possible to significantly reduce electric consumption by adapting the electric supply to the degree of clogging or contamination of the main filters **72;** furthermore, they can be selected with a smaller size or nameplate features compared to the fixed operation point pumps of known swimming pool systems, thereby also assisting in reducing electric and purchase consumption of the pumps themselves.

The operation of the pumps controlled by inverters is also more regular and uniform, and significantly reduces breakages and blow-by caused by water hammer and reducing the production of reactive energy.

The previously described exemplary embodiments are susceptible to various modifications and variations without departing from the scope of protection of the present invention.

For example, the rotation speed of the pumps **13** can be varied not only by inverters but also by speed variators that connect the pumps to the electric motors that drive them.

For example, each reference in this description to "an embodiment", "an exemplary embodiment" means that a particular feature or structure described in relation to such embodiment is comprised in at least one embodiment of the invention and in particular in a specific variant of the invention as defined in a main claim.

The fact that such expressions appear in various steps of the description does not imply that they necessarily refer only to the same embodiment.

Furthermore, when a feature, element, or structure is described in relation to a particular embodiment, it is observed that applying such feature, element, or structure to other embodiments is within the competence of the average person skilled in the art.

Numerical references differing only by different primes, e.g., **21', 21", 21**^{III}, unless otherwise specified, indicate different variants of an element referred to in the same way.

Furthermore, all the details are replaceable by technically equivalent elements.

For example, the materials used, as well as the dimensions, can be any depending on the technical needs.

It should be understood that an expression such as "A *comprises* B, C, D" or "A *is formed by* B, C, D" also comprises and describes the particular case in which "A *consists of* B, C, D".

The expression "*A comprises an element B*" unless otherwise specified is to be understood as "*A comprises one or more elements B*".

References to a "first, second, third, ... nth entity" are solely for the purpose of distinguishing them from each other, but the indication of the nth entity does not necessarily imply the existence of the first, second ... (n-**1**)th entity.

The examples and lists of possible variants of the present application are to be understood as non-exhaustive lists.

## Claims

1. System for cleaning a swimming pool (**1**), comprising
- a main basin (**3**), configured for containing a mass of water so as to allow one or more people to at least partially dive therein, where the main basin (**3**) forms a bottom in the lower part and comprises one or more bottom intake mouths (**32**) each of which is placed at or near of said bottom;
- a compensation basin (**5**) fluidically connected to the main basin (**3**) and configured for receiving and containing water from the main basin (**3**) and/or supply water to the main basin (**3**);
- a filtration system (**7**) configured for filtering the water from the main basin (**3**) and the compensation basin (**5**);
- a level detector (**9**) configured for determining the level of the water contained in the compensation basin (**5)**;
the system for cleaning a swimming pool (**1**) being programmed or in any case configured for regulating the inflow towards the filtration system (**7**) of the water from the one or more bottom intake mouths (**32**) and from the compensation basin (**5**) based on the detections of the level detector (**9**).

2. System according to claim **1**, comprising a bottom control valve (**11**) configured for regulating the inflow towards the filtration system (**7**) of the water from the one or more bottom intake mouths (**32**).

3. System according to claim **2**, programmed or in any case configured for operating in a normal filtering operation mode in which, when the level detector (**9**) detects that the level of the water in the compensation basin (**5**) is substantially equal to or lower than a first lower threshold, the bottom control valve (**11**) is at least partially open allowing the inflow towards the filtration system (**7**) of water from the one or more bottom intake mouths (**32**).

4. System according to claim **3**, programmed or in any case configured for allowing the inflow towards the filtration system (**7**) of water from the compensation basin (**5**) when the level detector (**9**) detects that the level of the water in the compensation basin (**5**) is substantially equal to or lower than the first lower threshold **SINF_1** in the normal filtering operation mode.

5. System according to claim **2** o **3**, programmed or in any case configured for fully opening the bottom control valve (**11**) allowing the inflow towards the filtration system (**7**) of water from the one or more bottom intake mouths (**32**) when the level detector (**9**) detects that the level of the water in the compensation basin (**5**) is substantially equal to or lower than a second lower threshold **SINF_2**, where the second lower threshold is lower than the first lower threshold **SINF_** 1.

6. System according to one or more claims **3** to **5,** programmed or in any case configured for fully closing the bottom control valve (**11**) preventing the inflow towards the filtration system (**7**) of water from the one or more bottom intake mouths (**32**) when the level detector (**9**) detects that the level of the water in the compensation basin (**5**) is substantially higher than the first lower threshold **SINF_1.**

7. System according to one or more claims **3** to **6**, programmed or in any case configured for preventing the inflow towards the filtration system (**7**) of water from the compensation basin (**5**) when the level detector detects that the level of the water in the compensation basin (**5**) is substantially higher than the first lower threshold **SINF_1** in the normal filtering operation mode.

8. System according to one or more preceding claims, programmed or in any case configured for operating in a filter cleaning operation mode in which the inflow towards the filtration system (**7**) of water from the one or more bottom intake mouths (**32**) is allowed.

9. System according to claim **8**, programmed or in any case configured for preventing the inflow towards the filtration system (**7**) of water from the compensation basin (**5**) in the filter cleaning operation mode.

10. System according to one or more claims **3** to **9**, programmed or in any case configured for maintaining the flow rate of the water from the main basin (**3**) and/or the compensation basin (**5**) and directed towards the filtration system (**7**) around a first target flow rate value when it operates in the normal filtering operation mode.

11. System according to one or more claims **3** to **10**, programmed or in any case configured for maintaining the flow rate of the water from the main basin (**3**) and/or the compensation basin (**5**) and directed towards the filtration system (**7**) around a second target flow rate value when it operates in the filter cleaning operation mode.

12. System according to one or more preceding claims comprising one or more pumps (**13**) configured for directing the water from the main basin (**3**) and/or the compensation basin (**5**) towards the filtration system (**7**), the system being programmed or in any case configured for regulating the flow rate and/or hydraulic head, of the one or more pumps (**13**) based on the flow rate or speed of the water filtered by the filtration system (**7**) and directed from it towards the main basin (**3**).

13. Process for operating a system for cleaning a swimming pool, comprising the following operations:
- providing a system for cleaning a swimming pool having the features according to one or more claims **1-12;**
- filtering the water from the main basin (**3**) and the compensation basin (**5**) by the filtration system (**7**);
- determining, by a level detector (**9**), the level of the water contained in the compensation basin (**3**);
- regulating the inflow towards the filtration system (**7**) of the water from the one or more bottom intake mouths (**32**) and the compensation basin (**5**) based on the detections of the level detector (**9**).
